# EUROPÄISCHE PATENTSCHRIFT

(11) **EP 0 665 690 B1**
(45) Veröffentlichungstag und Bekanntmachung des Hinweises auf die Patenterteilung: **29.05.1996**
(21) Anmeldenummer: 95810002.6
(22) Anmeldetag: 04.01.1995
(51) Int. Cl.: H04N 7/16, H04N 5/445

(54) **Verfahren und Vorrichtung zur Datenerfassung für Fernseh-Publikumsforschung**
Method and device for data-acquisition for polling of television-audience
Procédé et dispositif d'acquisition de données pour l'interrogation de téléspectateurs

(30) Priorität: 17.01.1994 CH 134/94
(43) Veröffentlichungstag der Anmeldung: 02.08.1995
(73) Patentinhaber: SRG SCHWEIZERISCHE RADIO- UND FERNSEHGESELLSCHAFT, CH-3006 Bern (CH)
(72) Erfinder: Mischler, Peter, CH-2503 Biel (CH)
(74) Vertreter: AMMANN PATENTANWAELTE AG BERN

(56) Entgegenhaltungen:
- EP-A- 0 447 933
- WO-A-93/12611
- DE-A- 4 220 760
- US-A- 4 974 085
- SIEMENS COMPONENTS, Bd. XXIV, no.2, April 1989 BERLIN, DE, Seiten 63-67, XP 000039748 W. GEFFEKEN 'Easy Programming of Video Recorders'

## Beschreibung

Die vorliegende Erfindung bezieht sich auf Verfahren gemäss Oberbegriff des Anspruchs 1 und Vorrichtungen zur Durchführung des Verfahrens zur Ueberwachung der Aktivität der Geräte einer Video- und Fernsehinstallation.

Die Daten für Fernsehzuschauerforschung werden heutzutage sehr oft durch automatische Ueberwachungssysteme erhoben. Diese Vorrichtungen verfügen einerseits über Sonden an den einzelnen Geräten, die deren Betriebszustand an eine Zentrale melden. Es gibt einerseits solche Sonden, die direkt die Einstellung des Tuners eines Fernsehgeräts (abgekürzt TV) oder eines Videorecorders (abgekürzt VCR) bestimmen und daraus über eine Liste der Sendefrequenzen lokal empfangbarer Fernsehsender das gerade eingestellte Fernsehprogramm bestimmen. Diese Sonden müssen jedoch an das jeweilige Gerät angepasst sein, was bei der heutigen Vielfalt an Geräten äusserst aufwendig ist.

Eine Aufgabe der vorliegenden Erfindung besteht darin, ein Verfahren und eine Vorrichtung zur automatischen Erfassung des Zustands einer Videoinstallation anzugeben, die ohne Eingriffe in die überwachten Geräte auskommt.

Diese Aufgabe wird durch das Verfahren bzw. die Vorrichtung gemäss den unabhängigen Ansprüchen erfüllt. Die weiteren Ansprüche definieren bevorzugte Ausführungsformen der Erfindung.

Die Vorrichtung besteht aus einem sogenannten "Plug-In"-Adapter. Er ist in der Regel mit einer Zentraleinheit verbunden, deren Aufgaben aus der Datenaufzeichnung, Verbindung zu einem Zentralcomputer via Modem, dem Speichern und Nachführen einer Zuordnungsliste der Sender bzw. Programme zu den Kanälen, usw. bestehen. Der Namensteil "Plug-In" deutet an, dass die Verbindungen zu allen Geräten, die dieser "Plug-In"-Adapter überwacht, durch einfaches "Anstecken" ohne Eingriffe in die jeweiligen Geräte erfolgt. Zur Vereinfachung soll im weiteren der "Plug-In"-Adapter mit PIA bezeichnet werden.

Der PIA überwacht den Status aller Geräte, die direkt oder indirekt mit einem bestimmten Kabelfernseh- oder Antennenanschluss, im weiteren TV-Anschluss, verbunden sind. Dazu ist der PIA mit jedem Gerät, soweit nötig, auf eine noch auszuführende Art verbunden.

Um feststellen zu können, auf welchen Kanal ein Gerät eingestellt ist, speist der PIA am TV-Anschluss ein spezielles Signal ein. Diese Einspeisung erfolgt in die Videokomponente des Fernsehsignals, und zwar so, dass bei der Darstellung des Fernsehsignals auf einem Bildschirm keine Störung zu bemerken ist. Dies wird dadurch erreicht, dass das Signal in die nicht sichtbaren Zeilen am Anfang und Ende eines Fernsehbildes eingesetzt wird. Das Signal besteht entweder aus einem Puls oder Burst, der wegen der guten Erkennbarkeit und zur Verringerung von Störung bevorzugt als möglichst gutes Sinussignal ausgebildet ist und sich über einen grossen Teil einer bestimmten der obengenannten, bevorzugt nicht sichtbaren Zeilen erstreckt.

In der zweiten Ausbildung wird der Burst zusätzlich amplitudenmoduliert, d. h. im einfachsten Fall ein- und ausgeschaltet, wobei diese Modulation zugleich eine binärkodierte Information beinhaltet. Z. B. kann auf diese Art pro Bildschirmzeile ein Byte in das Videosignal eingeführt werden. Die so ins Videosignal eingeführten Informationen können sein: Uhrzeit, Datum, Kanalnummer, Frequenz, Senderkennung, Programm usw.

Die Verwendung eines solchen Bursts im Videosignal hat den Vorteil, dass er ohne Probleme auch von VCRs aufgezeichnet wird und bei der Wiedergabe des aufgezeichneten Fernsehsignals wiedererkannt werden kann bzw. die in der modulierten Form des Burst enthaltene Information wieder ausgelesen werden kann, wodurch es möglich ist, festzustellen, welches Programm aufgezeichnet wurde. Mit Rücksicht auf ältere VCR's, die eine eingeschränkte Videobandbreite aufweisen, hat es sich gezeigt, dass für den Burst z. B. eine Frequenz von 2 MHz gewählt werden kann, die auch von diesen Geräten problemlos aufgezeichnet werden kann.

Das so mit dem Burst beladene Fernsehsignal wird nun benutzt, um festzustellen, ob ein Gerät der Videoinstallation eingeschaltet ist und auf welchen Kanal es eingestellt ist. Modernere Fernsehgeräte und VCRs weisen hierfür Videoausgänge oder SCART-Anschlüsse auf, an denen ein Videosignal abgenommen werden kann, das dem gerade wiedergegebenen Fernsehsignal bzw. bei VCRs gerade aufgenommenen und/oder durchgeschleiften Fernsehsignal entspricht.

Bei älteren Fernsehgeräten ist oft nur ein Antenneneingang vorzufinden. Bei diesen Geräten wird die neuartige Sonde zur Strahlverfolgung eingesetzt. Sie kann im übrigen auch dazu dienen, grob die Hell-/Dunkeleinstellung eines Fernsehgerätes zu ermitteln. Die Sonde spricht auf die elektrischen und magnetischen Felder an, die von den Strahlströmen, der Modulation der Nachbeschleunigungsspannung durch den Elektronenstrahl und von den magnetischen Ablenkeinheiten der Bildröhre ausgehen. Er besteht aus zwei parallel zueinander angeordneten Flachspulen, die so miteinander verbunden sind, dass sich ihre Induktionswirkungen, d. h. die gegebenenfalls in ihnen induzierten Spannungen, addieren.

Die Spulen bilden so einerseits eine Spule zum Empfang der magnetischen Streufelder und andererseits einen Kondensator, dessen beide Platten die beiden Spulen bilden. Der gleichstrommässige Kurzschluss der beiden Platten des Kondensators wird durch die Reaktanz der Spulen bei zunehmender Frequenz aufgehoben. Da von den aufgefangenen elektrischen Streufeldern nur die höherfrequenten Anteile interessieren, die u. a. den Burst enthalten, erzeugen diese ein deutliches Signal.Das Signal der Sonde wird an den beiden anderen Enden der beiden Spulen abgegriffen.

Das Aufteilen des Signals der Sonde ist überraschend einfach durch Filter möglich. Man erhält mit genügender Genauigkeit die Lage des Horizontalsynchronsignals, des Vertikalsynchronsignals und den Burst, sei es in der modulierten oder unmodulierten Form. Das Horizontalsynchronsignal und das Vertikalsynchronsignal erlauben die eindeutige Strahlverfolgung und damit unter anderem auch das Ermitteln des Zeitpunkts, zu dem der Burst auftreten sollte. Zur Bestimmung des Kanals kann dann das Vorhandensein des Burstsignals an sich oder die darin vorhandene Information ausgewertet werden.

Da die Sonde darauf angewiesen ist, dass der Strahlstrom während der zur Bursteintastung benutzten Bildzeile auch eingeschaltet ist, kann es bei einigen TV-Typen nötig sein, ein Bildzeile zu wählen, die im sichtbaren Bereich liegt. Diese TV-Geräte schalten den Strahlstrom während des unsichtbaren Bildteils ab, um z. B. eine automatische Justierung des Strahlstroms vorzunehmen. Allerdings handelt es sich bei derartigen Geräten in der Regel um neuere Typen, die auch einen Videoausgang haben, so dass die Sonde nicht benötigt wird.

Die Zuordnung der Kanäle zu Sendern oder Programmen kann über eine Liste erfolgen, die im PIA oder in der Zentraleinheit gespeichert ist.

Die Erfindung soll weiter anhand eines Ausführungsbeispiels unter Bezugnahme auf Figuren erläutert werden.
- Fig.1: zeigt das Blockschaltbild eines "Plug-In"-Adapters mit der von ihm überwachten Videoinstallation,
- Fig.2: zeigt eine schematische Frontansicht eines Fernsehgerätes,
- Fig.3: zeigt schematisch die Datenmodulation des Bursts,
- Fig.4: zeigt mehr im Detail die Ueberwachung eines Fernsehgeräts (TV),
- Fig.5: zeigt eine Seitenansicht des neuen Detektors für Fernsehgeräte,
- Fig.6: zeigt die Leiterbahnführung als Ansicht gemäss VI in Fig. 5, und
- Fig.7: zeigt die Leiterbahnführung der zweiten Spule des Detektors in einer Ansicht gemäss VII in Fig. 5.

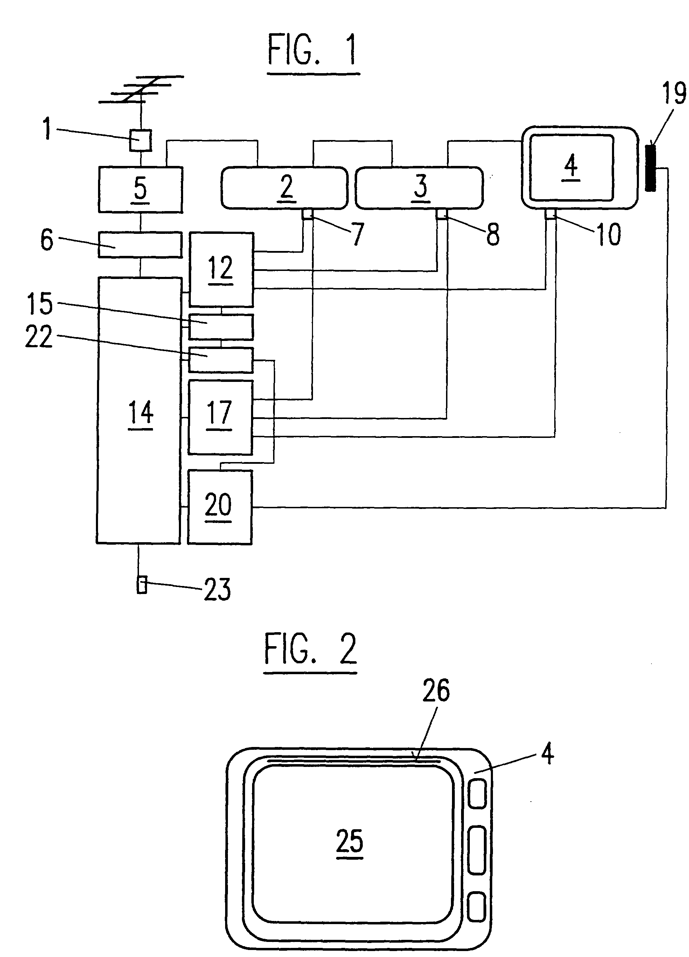

In Fig. 1 ist das Blockschaltbild eines "Plug-In"-Adapters mit der schematisch dargestellten, von ihm überwachten Videokette dargestellt, die über den gemeinsamen Fernsehanschluss 1 mit einem Fernsehsignal versorgt wird. Die Videokette besteht im vorliegenden Fall aus zwei Videorecordern (VCR) VCR₁ 2 und VCR₂ 3 und einem Fernsehgerät 4. Das vom Fernsehanschluss 1 kommende Fernsehsignal wird zunächst zum HF-Eintaster 5 geleitet. Dieses Fernsehsignal führt z. B. Signale im Bereich von 40 - 900 MHz. Der HF-Eintaster 5 dient dazu, das Burstsignal in das Fernsehsignal einzutasten, das modifizierte Fernsehsignal an die nachfolgende Videokette weiterzugeben und eine Entkopplung der Vorrichtung vom Fernsehanschluss 1 zu bewirken, so dass die Bursts nicht über den Fernsehanschluss 1 nach aussen gelangen. Der HF-Eintaster 5 ist der Modulationsart der Bildinformation angepasst: bei der heute verwendeten Technik der Amplitudenmodulation des Bildträgers durch das Videosignal genügt eine Addition der beiden Signale.

Der Burst wird von einem Burstgenerator 6 erzeugt, der ein oberwellenarmes, sinusförmiges Signal erzeugt und sich auf jede Frequenz im Bereich der empfangbaren Kanäle einstellen lässt. Seine Frequenz wird vom Prozessor 14 dabei immer um einen konstanten Wert gegenüber dem Bildträger des Fernsehsignals versetzt, in das der Burst eingefügt werden soll.

Das modifizierte Fernsehsignal gelangt nun nacheinander zu den beiden Videorecordern VCR₁ 2 und VCR₂ 3 und schliesslich zum Fernsehgerät 4. Bei den heutigen Videorecordern ist dies auch dann der Fall, wenn ein von einem der Videorecorder 2 oder 3 auf Kassette aufgezeichnetes Programm wiedergegeben wird, d. h. wenn der Tuner des Fernsehers auf einen von einem der Videorecorder benutzten Kanal eingestellt ist, und dieser Videorecorder gerade von Kassette abspielt.

Die Synchronisation des Bursts mit dem von der Kassette stammenden Videosignal ist auch hier gewährleistet, da die Synchronisation von der Wiedergabe am Fernsehgerät 4 abgeleitet wird, die ihrerseits synchron zum von der Kassette stammenden Videosignal ist. Es kann so festgestellt werden, dass einer der Videorecorder 2 oder 3 auf Wiedergabe von Kassette steht und dass das Fernsehgerät 4 dieses abgespielte Videosignal wiedergibt, und zwar unabhängig vom Inhalt der Kassette, wenn das Burstsignal nur dann am Fernseher 4 detektiert werden kann, wenn es auf einem der Ausgabekanäle der Videorecorder 2 bzw. 3 eingespeist wird.

Da, wenn das abgespielte Videosignal keine Datenbursts enthält, also nicht auf einer gemäss dieser Erfindung ausgestatteten Videoanlage aufgenommen wurde, es nicht möglich ist, automatisch den dargestellten Inhalt zu identifizieren, ist es kein Nachteil, wenn bei mehreren vorhandenen Videorecordern nicht klar ist, das Ausgangssignal welches Videorecorders dargestellt wird. In einem solchen Fall kann über eine konventionelle Abfrage- und Eingabeeinheit die Information über den Kassetteninhalt vom Benutzer abgefragt werden, sofern dies nötig ist. Derartige Abfrage- und Eingabeeinheiten sind an sich bekannt.

Die Ueberwachung der beiden Videorecorder erfolgt über ihre Videoausgänge 7 bzw. 8. Falls das Fernsehgerät 4 seinerseits auch über einen Videoanschluss 10 verfügt, kann auch das Fernsehgerät 4 über diesen Anschluss 10 überwacht werden. Die Ausgangsleitung jeweils des Videoanschlussses 7, 8, 10 sind einzeln mit einem Videoselektor 12 verbunden, der unter der Kontrolle des Prozessors 14 eines der Videosignale auswählt und zu dem Burstdetektor 15 durchschaltet.

Der Burstdetektor 15 ermittelt, ob in dem Videosignal ein Burst vorhanden ist und ob er mit Daten moduliert ist, und gibt das Ergebnis an den Prozessor 14 weiter. Bevorzugt werden jedoch diese Funktionen weitgehend vom Prozessor 14 selbst durchgeführt. Insbesondere der Burstdetektor 15, der mit dem Zeilen- und Bildwechsel synchronisiert werden muss, und der Burstdemodulator 22 sind bevorzugt im Prozessor 14 integriert.

Um auch die Möglichkeit der Einspeisung eines reinen Videosignals in die Vorrichtung zu erfassen, sind weiterhin die Eingänge der Videoanschlüsse 7, 8, 10 mit einem Burstgenerator mit schaltbaren Ausgängen 17 verbunden, dessen Ausgänge wiederum vom Prozessor 14 gesteuert werden. Dieser Burstgenerator 17 synchronisiert sich auf das an dem jeweiligen Videoeingang 7, 8 oder 10 anliegende externe Videosignal und injiziert den Burst in dieses Videosignal.

Falls das Fernsehgerät 4 über keine Videobuchse 10 verfügt, wird zur Ueberwachung des Fernsehgerätes 4 die aussen anbringbare Sonde 19 eingesetzt. Sie hat bevorzugt die Form einer Scheibe oder einer Platte und wird am Gehäuse des Fernsehgeräts 4 am besten in der Nähe des Bildröhrenfusses angebracht. Das von der Sonde 19 aufgenommene, von der Bildröhre ausgehende Streusignal wird der Auswertungsschaltung 20 zugeführt. Diese enthält im wesentlichen drei Filter: Ein Filter mit 2 MHz Durchlassfrequenz, das ein der Videoinformation der Zeilen entsprechendes Signal abtrennt, das also gegebenenfalls auch den Burst enthält; ein Filter für die Zeilenwechselfrequenz (in Europa 15,625 kHz), das ein den Zeilenwechseln entsprechendes Signal abtrennt, das besonders für den horizontalen Strahlrücklauf markante Anteile aufweist; und ein Filter für die Bildwechselfrequenz, oder genauer die Halbbildwechselfrequenz, (in Europa: 50 Hz), der ein den Bildwechseln, d. h. den vertikalen Strahlrückläufen entsprechendes Signal mit markanten Anteilen für den vertikalen Strahlrücklauf herausfiltert. Die Synchronisationssignale werden dem Prozessor 14 zugeleitet. Das Burstsignal wird, ebenso wie das vom Burstdetektor 15, einem Burstdemodulator 22 zugeführt, der dem Prozessor 14 die Information liefert, ob ein einfacher Burst, kein Burst oder ein datenmodulierter Burst erkannt wurde. Im letzteren Fall führt er gleichzeitig die Datendemodulation durch und liefert diese Daten ebenfalls an den Prozessor 14.

Wird am Fernsehgerät 4 ein Burst detektiert, und ist dieser Burst mit Daten moduliert, so kann der Prozessor 14 direkt das gerade von den Zuschauern betrachtete Programm ermitteln. Handelt es sich um einen nicht mit Daten modulierten Burst, so stellt er fest, von welcher der Burstinjektionseinheiten, d. h. dem HF-Eintaster 5 oder dem Burstgenerator 17, gerade ein Burst erzeugt wird und, im Falle des Burstgenerators 17, in welchen Videoeingang dieses Signal injiziert wird. Anhand des Resultats dieser Auswertung stellt er fest, dass gerade ein über einen der Videoeingänge 7 oder 8 eingespeistes Videoprogramm angesehen wird, bzw. dass ein vom Fernsehanschluss 1 eingehendes Programm angesehen wird, wobei er, da der HF-Eintaster 5 kanalselektiv den Burst injiziert, über die Kanaleinstellung des HF-Eintasters 5 auch den Kanal ermitteln kann.

Eine Wiedergabe eines auf Kassette gespeicherten Programms erkennt der Prozessor daran, dass er einerseits einen datenmodulierten Burst am Fernseher 4 detektiert, aber keiner der externen Fernsehanschlüsse die Quelle dieses Bursts ist, also weder der Fernsehanschluss 1, noch einer der Videoeingänge 7, 8 oder 10.

Diese Informationen werden über den Anschluss 23 an eine Zentraleinheit, wie sie aus gegenwärtigen Ueberwachungssystemen bekannt ist, zugeführt, um sie zu speichern oder sonstwie auszuwerten.

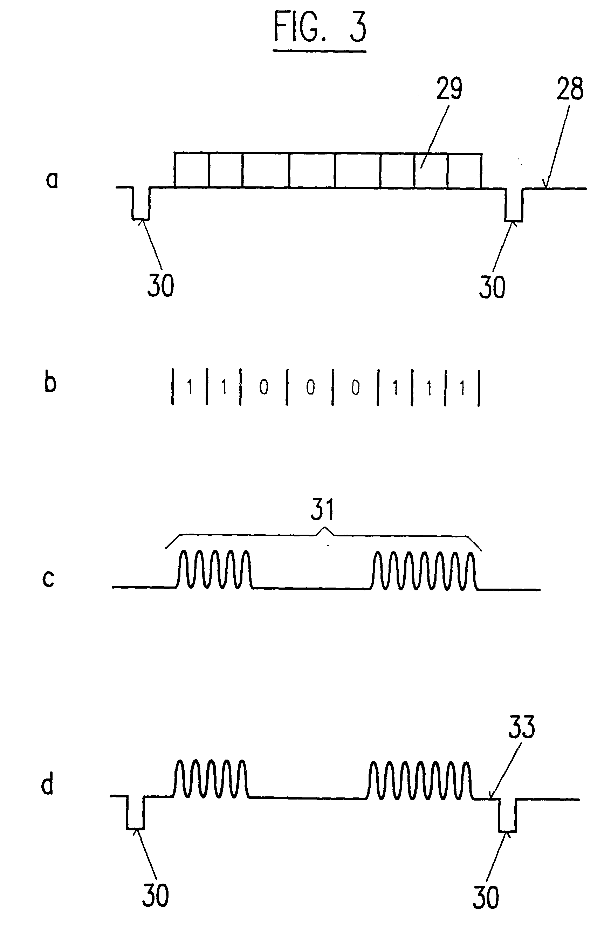

Anhand der Fig. 2 und 3 soll nun der Burst genauer beschrieben werden. Fig. 2 zeigt eine schematische Ansicht des Fernsehers 4 mit einem für die Fernsehbilddarstellung nutzbaren Bereich 25 der Bildröhre und der beispielhaft gewählten 23. Bildzeile 26. Diese Bildzeile liegt oberhalb der nutzbaren Fläche 25 der Bildröhre. Es könnte natürlich auch eine unterhalb dieser Fläche 25 liegende Bildzeile gewählt werden, allerdings ist es naheliegender, kurz nach dem Vertikalsynchronisationssignal folgende, unsichtbare Bildzeilen zu wählen, die, da der Vertikalsynchronimpuls ein Sprung des Strahls nach oben bewirkt, oberhalb der sichtbaren Fläche 25 liegen. Für diese Bildzeilen muss nur eine geringe Anzahl von Zeilen nach dem Vertikalsynchronimpuls gezählt werden, wodurch sich das Risiko vermindert, durch einen Bildzeilenzählfehler eine falsche Bildzeile auf den Burst hin zu untersuchen.

Der Burst besteht z. B. aus einem einfachen Hochfrequenzsignal von 2 MHz. Fig. 3a zeigt das ursprüngliche Videosignal 28 der benutzten Bildzeile 26 mit dem darauf in Form von Kästchen angedeuteten Zeitraster 29 für die Datenmodulation des Bursts. Das Zeitraster 29 belegt in seiner Gesamtlänge 40 Mikrosekunden bei einer Zeilendauer inklusive Horizontalsynchronimpuls 30 (H-Puls) von 64 Mikrosekunden. Jedes der Kästchen des Zeitrasters 29 repräsentiert eine Zeitspanne von 5 Mikrosekunden entsprechend, bei einer Burstfrequenz von 2 MHz, 10 Burstschwingungen. Im Falle eines Bursts, der nicht mit Daten moduliert ist, wird einfach der Burst während der Gesamtdauer des Zeitrasters 29, also während mindestens 40 Mikrosekunden, in das Videosignal injiziert, was, wie noch gezeigt wird, einer Bitfolge aus lauter Einsen (oder Nullen abhängig von der Codierung) entspricht. Für die Datencodierung im Burstsignal muss daher diese Bitfolge eine unmögliche Kombination darstellen, oder der Burst eine Überlänge aufweisen, um ihn von einem 11111111-Daten-Burst unterscheiden zu können. Codierungen, die diese Anforderungen erfüllen, sind ohne weiteres im Bereich der Computerdatenübertragung aufzufinden.

Eine einfache Möglichkeit zur Unterscheidung des datenmodulierten Bursts vom unmodulierten Burst besteht darin, den unmodulierten Burst um die Dauer eines Bits länger zu wählen, als die für den datenmodulierten Burst vorgesehene Zeitspanne.

Fig. 3b zeigt ein Beispiel einer zu kodierenden Bitfolge (11000111). Fig. 3c zeigt das sich aus dieser Bitfolge ergebende Burstsignal 31, und Fig. 3d schliesslich zeigt das Videosignal 33 mit dem injizierten, datenmodulierten Burstsignal.

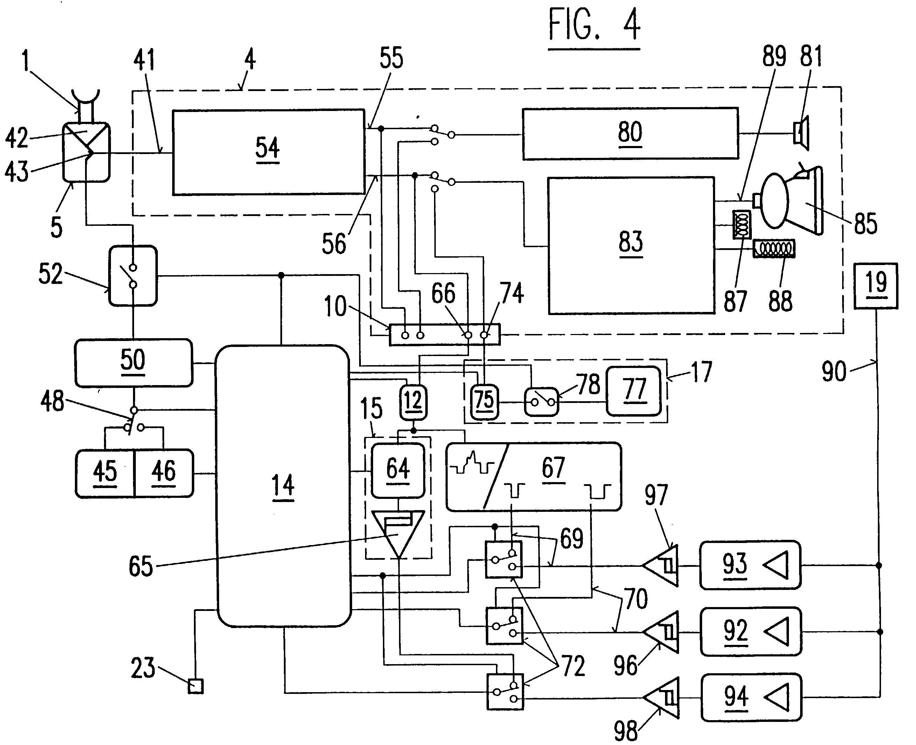

Die Statusüberwachung eines Fernsehgerätes wird anhand der Figur 4 erklärt. Zur Vereinfachung wird ein Fernsehgerät betrachtet, das direkt mit einem Fernsehanschluss verbunden ist. Das Fernsehsignal gelangt vom Fernsehanschluss 1 über den HF-Eintaster 5 zum Antennenanschluss 41 des TV. Im HF-Eintaster 5 ist der Entkopplungsverstärker 42 und der eigentliche Einkoppler 43 angedeutet, der der Einkopplung des Burstsignals in das Fernsehsignal dient. Das Burstsignal wird von den beiden VCO's 45 und 46 erzeugt, die ein oberwellenarmes, kontinuierliches Sinussignal erzeugen, dessen Frequenz einstellbar ist. Die beiden VCO's überstreichen unterschiedliche Frequenzbereiche: VCO 45 ist für Frequenzen von 40 - 450 MHz ausgelegt, VCO 46 für den Frequenzbereich von 450 - 1000 MHz. Die Frequenz der von den beiden VCO's (steuerbare Oszillatoren) gelieferten Signale wird vom Prozessor 14 auf einen Wert eingestellt, der, für einen 2 MHz-Burst, um 2 MHz gegenüber dem Bildträger nach höheren Frequenzen hin verschoben ist. Der Prozessor 14 wählt über den HF-Schalter 48 das Signal eines der beiden VCO als Bursteintastsignal aus.

Die Verwendung von zwei VCO's statt einem ist beim derzeitigen Stand der Technik nötig, um ein möglichst "sauberes", oberwellenarmes Bursteintastsignal erzeugen zu können, bei dem die erste und alle weiteren Harmonischen um mindestens 40 dB gegenüber der Grundschwingung abgeschwächt sind. Dasselbe gilt selbstverständlich auch für alle sonstigen Störsignale.

Nach dem Schalter 48 folgt ein HF-Pegelsteller 50. Er dient dazu, das Bursteintastsignal in der Amplitude an das Fernsehsignal anzupassen. Als optimal hat sich die Einstellung des Bursteintastsignals auf den mittleren Signalpegel des Fernsehsignals am Einkoppler 43 bewährt. Das Ausgangssignal des HF-Pegelstellers 50 wird von einem zweiten HF-Schalter 52 zum HF-Eintaster 5 durchgeschaltet. Der HF-Schalter 52 wird vom Prozessor 14 dann auf Durchgang geschaltet, wenn das Burstsignal im Videosignal auftauchen soll, d. h., wenn die ausgewählte, unsichtbare Bildzeile gerade übertragen wird.

Im vorliegenden Beispiel wird dieser Zeitpunkt aus den vom Fernsehgerät abgenommenen Signal ermittelt. Da auf der Uebertragungsstrecke vom Fernsehanschluss bzw. dem HF-Eintaster 5 bis zur Abnahme der Ueberwachungssignale Zeitverschiebungen auftreten können, macht es sich vorteilhaft bemerkbar, dass der Burst nicht die gesamte Länge einer Bildzeile in Anspruch nimmt. Der sich dadurch ergebende Spielraum in der Lage des Bursts genügt in der Regel, um diese Zeitverschiebungen aufzufangen. Zusätzlich kann auch eine rechnerische Kompensation durch den Prozessor 14 erfolgen. Da ein bestimmter Aufbau einer Videokette normalerweise nicht mehr verändert wird, sind auch diese Zeitverschiebungen, die im wesentlichen nur von der Reihenfolge der Geräte abhängt, konstant und daher rechnerisch bei der Steuerung des HF-Schalters 52 berücksichtigbar. Da die Vorrichtung auf das Fernsehsignal im zu testenden Kanal synchronisiert ist, kann schon ein Burst pro Kanal und Fernsehkanal genügen, um festzustellen, ob dieser Kanal eingestellt ist.

Das mit dem Burst beladene Fernsehsignal gelangt im Fernsehempfänger 4 zunächst zu den üblichen HF-, ZF- und Demodulationsstufen 54, an deren Ausgängen das Tonsignal 55 und das Videosignal 56 getrennt zur Verfügung stehen. Bei moderneren Geräten sind die beiden Signale 55 und 56 an einem von aussen zugänglichen Videoanschluss 10 zugänglich und können zur Überwachung des Gerätestatus abgenommen werden. Da der Videoanschluss auch zum Einspeisen von Video- (und Audio-)Signalen dienen kann, z. B. von einem Videorecorder oder einer Videokamera, müssen normalerweise auch die Eingangsbuchsen mit dem Überwachungssystem verbunden sein.

Das Videosignal gelangt von der Videoausgangsbuchse 66 zum Videoselektor 12, der dazu dient, zwischen verschiedenen Videosignalquellen umzuschalten, wozu er neben dem dargestellten einen Anschluss noch eine Anzahl anderer, nicht dargestellter Eingänge besitzt. Das Ausgangssignal des Videoselektor 12 gelangt einmal auf ein Filter 64 mit 2 MHz Durchlassfrequenz, einer Bandbreite von 200 kHz und einer Einschwingzeit von weniger als 1 µs (Mikrosekunde). Dieses Filter wird zusätzlich, um einer Uebersteuerung durch das normale Videosignal zu vermeiden, nur während des Zeitraums vom Prozessor 14 aktiviert, während dem der Burst im Videosignal auftreten kann. Auf das Filter 64 folgt ein Komparator 65, an dessen Ausgang je nach Vorhanden- bzw. Nichtvorhandensein des Burstsignals ein entsprechendes logisches Signal erzeugt wird, z. B. + 5 Volt für Vorhandensein des Burstsignals, 0 Volt für Nichtvorhandensein des Burstsignals. Das Ausgangssignal des Videoselektors 12 wird auch dem Synchronisationsdetektor 67 zugeführt, der im Videosignal die Horizontal- und Vertikalsynchronisationspulse detektiert und in die vom Prozessor 14 benötigten Synchronisationsignale für Zeilen- und Bildwechsel 69 bzw. 70 umformt. Sowohl das Ausgangssignal des Komparators 65 als auch die Ausgangssignale des Synchronisationsdetektors 67 gelangen auf Auswahlschalter 72, mit denen zwischen der Auswertung eines direkt zur Verfügung stehenden Videosignals, wie gerade dargestellt, und derjenigen des Signals der Sonde 19 umgeschaltet wird.

Der Videoeingang 74 ist, falls die Möglichkeit besteht, dass an einem solchen Videoeingang 74 z. B. von einem Videorecorder ein Videosignal zugeführt wird, zusätzlich mit einem weiteren Videoselektor 75 verbunden, der vom Prozessor 14 gesteuert wird und neben dem einen gezeigten Ausgang, der zum Videoeingang 74 führt, noch weitere, nicht dargestellte Ausgänge aufweisen kann, die zu Videoeingängen von anderen Geräten der Videoinstallation führen. Mit Hilfe des Videoselektors 75 wählt der Prozessor 14 das Gerät aus, dem das Burstsignal über seinen Videoeingang 74 zugeleitet werden soll. Das dem Videosignal direkt zu überlagernde Burstsignal wird von einem Festfrequenzoszillator in der Form eines 2 MHz-Sinussignals erzeugt und über einen in seiner Funktion dem Schalter 52 entsprechenden Schalter 78 dem Videoselektor 75 zugeführt.

Die Überlagerung kann z. B. durch eine einfache, nicht dargestellte Addierschaltung mit zwei Eingängen und einem Ausgang geschehen, im einfachsten Fall in der Art eines Spannungsteilers. Die beiden Eingängen sind mit der Videosignalquelle bzw. einem Ausgang des Videoselektors 75 und der Ausgang mit dem Videoeingang 74 verbunden. Die Eintastung des Bursts kann synchron mit dem vom TV 4 abgenommenen Synchronisationssignal erfolgen.

Bei der hierzu analogen Überwachung der Videoanschlüsse 7 bzw. 8 an den Videorecordern muss noch der Fall betrachtet werden, dass VCR₁ 2 oder VCR₂ 3 auf Kassette aufnimmt, das TV 4 jedoch etwas anderes darstellt. Hier muss, um das aufgenommene Signal mit dem Burst zu versehen, auf das Videosignal synchronisiert werden. Dazu wird entweder das am Videoausgang 66 abnehmbare Signal oder direkt das am Videoeingang 74 anstehende Signal benutzt. Im letzteren Fall sind die Ausgänge des Videoselektors 75 zugleich als Eingänge eines im Videoselektors 75 enthaltenen Synchrongebers ausgebildet, der vom Prozessor 14 aktiviert wird und der aus dem Videosignal die Synchronpulse ableitet und den Burst freigibt. Der Videoselektor führt also die Synchronisation autonom durch.

Eine andere Möglichkeit besteht darin, zusätzlich einen Eingang des Videoselektors 12 mit dem Videoeingang 75 zu verbinden und die Synchronisation wie oben dargestellt über den Detektor 67 und Prozessor 14 durchzuführen.

Nachdem nun die Detektierung bzw. Zufuhr des Burstsignals über Videoein- und ausgänge am Videogerät erläutert wurde, soll nun die Burstdetektion über die Sonde 19 besprochen werden, die insbesondere bei Fernsehgeräten eingesetzt wird, die nicht über einen Videoanschluss 10 verfügen.

Im Fernseher 4 gelangt das Tonsignal 55 über den Verstärker 80 zum eingebauten Lautsprecher 81. Das Videosignal 56 wird von den üblichen Schaltungen zur Weiterverarbeitung des Videosignals 83 zur Bildröhre 85 und den Horizontal- bzw. Vertikalablenkspulen 87 bzw. 88 weitergeleitet.

Die Sonde 19 wird aussen am Gehäuse des Fernsehgerätes 4 angebracht. Bevorzugt ist dabei eine grosse Nähe zum Fuss der Bildröhre, also zu den Ablenkspulen 87, 88 und den Versorgungsleitungen 89 der Elektronenstrahl-Erzeugungssysteme. Dies ist in der Regel auf der Rückwand des Fernsehgerätes 4.

Die Sonde 19 nimmt die magnetischen und elektrischen Streusignale vor allem der Bildröhre auf. Die von anderen Einheiten des Fernsehgeräts 4 ausgehenden Streustrahlungen können durch eine entsprechende Positionierung der Sonde 19 minimiert werden. Das Signal der Sonde 19 wird über ein abgeschirmtes Kabel 90, bevorzugt ein gängiges Koaxialkabel, zum entsprechenden Eingang des PIA geführt, wo es auf die drei Filter 92, 93 und 94 aufgeteilt wird. Das Filter 92 ist ein einfaches Tiefpassfilter, das die dem Bildwechselimpuls entsprechende Komponente herausfiltert. Gemäss europäischer Norm erfolgt der Bildwechsel mit einer Frequenz von 50 Hz. Der Ausgang des Filters 92 ist mit einem Komparator 96 verbunden, an dessen Ausgang das Bildwechselsynchronisationssignal 70 zur Verfügung steht, das dem Auswahlschalter 72 zugeführt wird. Das Filter 93 ist auf die Zeilenfrequenz abgestimmt, gemäss europäischer Norm 15′625 Hz. Darauf folgt ein Komparator 97, der das Zeilensynchronisationssignal 69 erzeugt, das wiederum dem Auswahlschalter 72 zugeführt wird. Das Filter 94 ist auf die Burstfrequenz von 2 MHz abgestimmt. Sein Ausgangssignal wird von einem Komparator 98 in ein logisches Signal umgeformt, dessen zwei Zustände dem Vorhandensein bzw. Nichtvorhandensein des Bursts entspricht.

Bevorzugt handelt es sich bei den Filtern 92, 93, 94 um aktive Filter, wobei, da eine sehr kurze Einschwingzeit nötig ist, die darin enthaltenen Verstärker eine hohe Anstiegsgeschwindigkeit (Slew-Rate) und eine hohe Bandbreite aufweisen müssen. Bevorzugt anwendbar sind beim Stand der Technik Verstärker mit einer Slew-Rate in Bereich von 250-1000 V/µs und einer Bandbreite von 100-200 MHz, wobei höhere Werte noch Verbesserungen erbringen.

Die Datenmodulation des Bursts wird vom Prozessor 14 dadurch erzeugt, dass der Schalter 52 bzw. 78 im entsprechenden Rhythmus ein- und ausgeschaltet wird, wodurch sich eine 100 %ige Amplitudenmodulation des Bursts ergibt. Beim Wiederauffinden des Bursts im Videosignal durch die Komparatoren 65 bzw. 98 ergibt sich eine den Daten entsprechende Pulsfolge anstatt eines länger andauernden, konstanten Signals.

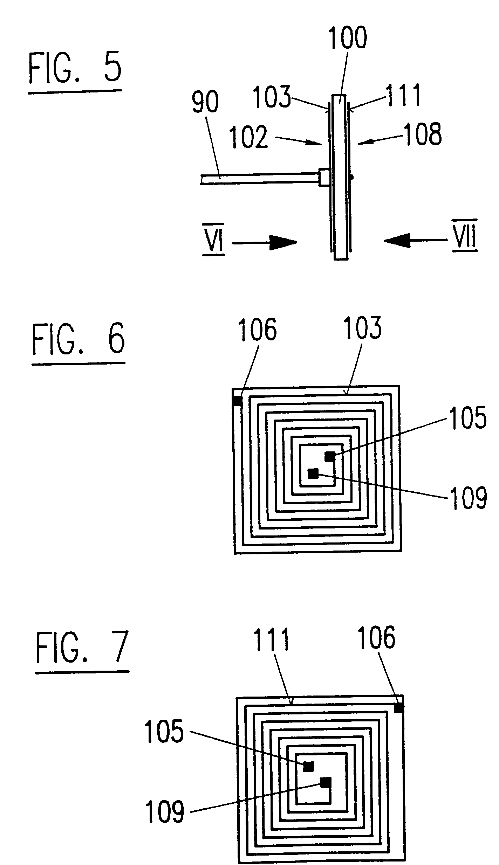

Den Aufbau der Sonde 19 zeigen die Figuren 5 bis 7. Sie besteht aus einer beidseitig kupferbeschichteten Printplatte 100. Figur 6 zeigt eine Ansicht der Vorderseite 102, auf der eine spiralförmige Leiterbahn 103 und drei Durchkontaktierungen herausgeätzt sind. Die Spiralwindungen werden dabei möglichst eng ausgeführt. Die Durchkontaktierung 105 dient dem Anschluss der Leiterbahn 103 an das Koaxialkabel 90, die Durchkontaktierung 106 dient der Verbindung mit der zweiten Spule auf der Rückseite 108, und die Durchkontaktierung 109 ist der zweite Anschlusspunkt für das Koaxialkabel 90.

Figur 7 zeigt die Rückseite 108 der Printplatte 100, auf der ebenfalls eine spiralförmige Leiterbahn 111 analog der Leiterbahn 103 ausgebildet ist. Durch die Durchkontaktierung 106 sind die beiden Leiterbahnen 103 und 111 zu einer Spule verbunden, die magnetische Felder detektieren kann. Gleichzeitig bilden die beiden Leiterbahnen 103 und 111 einen Plattenkondensator, wobei zumindest für hohe Frequenzen die Eigeninduktivität der beiden Einzelspulen die beiden Kondensatorflächen trotz des gleichstrommässigen Kurzschlusses durch die Durchkontaktierung 106 wechselspannungsmässig hinreichend voneinander trennt.

Eine bevorzugte Ausführung der Sonde 19 zeigt folgende Daten:
- Windungszahl: pro Spule 52, insgesamt 104
- Leiterbahnbreite: 0,2 mm
- Windungsabstand: 0,2 mm
- Ohmscher Widerstand: 40 Ω
- Induktivität, gemessen: 450 µH
- Platinenfläche: ca. 50 ∗ 50 mm

Zur Decodierung von im Fernsehsignal enthaltenen, senderspezifischen Informationen werden in Fig. 4 nicht gezeigte zusätzliche Funktionsgruppen vorgesehen. Zur Decodierung des VPS-Signals kann z. B. ein üblicher VPS-Decoderbaustein, wie er in Videorecordern zu finden ist, eingesetzt werden. Diese von vornherein vorhandene Information lässt sich prinzipiell auch über die Sonde 19 detektieren.

Zur Ermittlung des gerade vom Fernseher 4 dargestellten Programms injiziert der Prozessor 14 in einer vorgegebenen Reihenfolge in alle Kanäle nacheinander ein Burstsignal. Detektiert er dabei das Auftreten des Burstsignals auch im wiedergegebenen Fernsehsignal, so ist der empfangene Kanal identifiziert und diese Information wird über den Ausgang 23 an die Zentraleinheit übermittelt. Ist der Kanal erkannt, so genügt es, nur in diesen Kanal in gewissen Abständen, z. B. einmal pro Sekunde, zur Kontrolle den Burst zu injizieren, bis nach einem Programmwechsel der Burst nicht mehr aufgefunden wird. Tritt dies ein, so injiziert der Prozessor 14 den Burst zunächst in die bevorzugt gewählten Kanäle. Eine dafür nötige Prioritätenliste der Kanäle kann entweder fest vorgegeben sein, oder der Prozessor 14 kann eine interne Statistik führen, wie oft und wie lange welcher Kanal angewählt wurde. Mit dieser Prioritätenregelung wird erreicht, dass Programmwechsel zwischen den bevorzugten Programmen sehr rasch erkannt werden. Eine andere Strategie besteht darin, die dem zuletzt eingestellten Kanal benachbarten Kanäle zu bevorzugen, um einem sequentiellen Schalten über mehrere Kanäle hinweg schnell folgen zu können.

Wird nach Durchlaufen aller möglicher Kanäle kein Kanal identifiziert, so überprüft der Prozessor gegebenenfalls durch Injizieren des Bursts am Videoeingang, ob über die Videoeingänge des Fernsehgerätes ein Fernsehsignal in dieses eingespeist wird.

Der beschriebene Suchvorgang braucht natürlich nur durchgeführt zu werden, wenn der Prozessor 14 nicht ein datenmoduliertes Burstsignal auffindet, bzw. ein senderspezifisches Signal im Fernsehsignal detektiert wird, das bereits die nötigen Informationen liefert. Der Prozessor kann jedoch zusätzlich ein Burstsignal in das Fernsehsignal am Fernsehanschluss 1 injizieren, um festzustellen, ob das Fernsehsignal vom Fernsehanschluss 1 herrührt, d. h. eine direkte Wiedergabe stattfindet, oder ob eine Aufnahme eines Videorecorders oder ein aus einer anderer Quelle stammendes Fernsehsignal wiedergegeben wird.

In etwas grösseren Zeitabständen wird, falls Videorecorder 2, 3 in der Fernsehinstallation vorhanden sind, der Prozessor datenmodulierte Bursts in den Kanal injizieren, auf den gerade ein Videorecorder 2, 3 eingestellt ist. Dazu werden an allen Videorecordern 2, 3 die Videoausgänge 7, 8, wie oben für ein Fernsehgerät beschrieben, auf das Auftreten eines Burstsignals überwacht und daraus die Einstellung des Videorecorders abgeleitet. Dies erfolgt allerdings mit geringerer Priorität als die Feststellung der Einstellung des Fernsehgerätes 4, d. h. also mit geringerer Häufigkeit und bevorzugt nur, solange die Einstellung des Fernsehgerätes 4 bekannt ist.

Von dem beschriebenen Ausführungsbeispiel sind dem Fachmann im Rahmen der Erfindung Modifikationen möglich. Z. B. ist für die Funktion der Vorrichtung und das Vermeiden störender Nebenwirkungen nur die Qualität des Burstsignals wichtig, so dass auch die Verwendung von nur einem oder auch mehr als zwei VCO's 45, 46 denkbar ist.

### Abkürzungen

- PIA: Plug-In-Adapter.
- H-Puls: Horizontal-Synchronisations-Puls, Zeilenwechselpuls.
- TV: Fernsehgerät.
- V-Puls: Vertikal-Synchronisationspuls, Bildwechselpuls.
- VCO: Oszillator, der über digitale oder analoge Steuereingänge zur Frequenzeinstellung verfügt (eigentlich: Oszillator, dessen Frequenz durch eine Steuerspannung einstellbar ist).
- VCR: Videorecorder.

## Patentansprüche

1. Verfahren zur Feststellung der Kanaleinstellung in einer Videoinstallation, die mindestens ein Fernsehgerät (4) und/oder einen Videorecorder (2, 3) umfasst und mindestens einen Eingang für ein Fernsehsignal aufweist, dadurch gekennzeichnet, dass ein Kennsignal (31) lokal in die Videoinstallation injiziert und als ein Burst der Videokomponente (33) des Fernsehsignals eines Kanals überlagert wird, und dass aus dem Vorhandensein des Kennsignals in einem Ausgangs- oder Störsignal eines der Geräte (2, 3, 4) der Videoinstallation auf den Empfang besagten Kanals durch dieses Gerät geschlossen wird.

2. Verfahren nach Anspruch 1, dadurch gekennzeichnet, dass der Kanal, in den das Kennsignal injiziert wird, nach einer oder einer Kombination der folgenden Reihenfolgen ausgewählt wird:
- Auswahl nur aus den mit Fernsehprogrammen belegten Kanälen;
- sequentiell nach Kanalnummer;
- gemäss einer vorgegebenen Prioritätsliste;
- gemäss einer Reihenfolge nach abnehmender Benutzung des Kanals, wozu eine Statistik über Häufigkeit und Dauer der Anwahl eines Kanals laufend nachgeführt wird;
- in der Reihenfolge zunehmenden Abstands vom zuletzt bestimmten Kanal.

3. Verfahren gemäss Anspruch 1 oder 2, dadurch gekennzeichnet, dass die elektrischen und magnetischen Streufelder, die von der Bildröhre (85) eines Fernsehgerätes (4) ausgehen, in einer Sonde (19), die nahe dem Fernsehgerät (4) angeordnet ist, ein Signal erzeugen und dieses Signal durch Filter (92 - 94) in mindestens drei Teilsignale zerlegt werden, wobei das erste Teilsignal zur Bestimmung des Zeitpunkts des Bildwechsel, das zweite zur Bestimmung des Zeilenwechsels verwendet wird und das dritte den Burst enthält.

4. Vorrichtung zur Durchführung des Verfahrens gemäss einem der Ansprüche 1 bis 3, dadurch gekennzeichnet, dass zwischen dem Eingang der Videoinstallation für ein Fernsehsignal und einem Fernsehanschluss (1) ein HF-Eintaster (5) eingeschleift ist, von dem ein zweiter Eingang mit dem Ausgang eines Burstgenerators (6) verbunden ist, der ein um eine bestimmte, konstante Frequenzdifferenz gegen den Bildträger des Fernsehsignals eines Kanals verschobenes, im wesentlichen sinusförmiges Signal liefert.

5. Vorrichtung gemäss Anspruch 4, dadurch gekennzeichnet, dass die Frequenzdifferenz zum Bildträger des Fernsehsignals im Bereich von 1 MHz bis 4 MHz liegt, inbesondere etwa 2 MHz beträgt.

6. Vorrichtung gemäss Anspruch 4 oder 5, dadurch gekennzeichnet, dass der Burstgenerator (6) aus mindestens einem Signalgenerator (45, 46) mit regelbarer Frequenz und einem HF-Schalter (52) besteht, mittels dessen das Signal des Signalgenerators (45, 46) zum zweiten Eingang des HF-Eintasters (5) durchschaltbar ist.

7. Vorrichtung gemäss Anspruch 4, dadurch gekennzeichnet, dass der Signalgenerator (45, 46) ein oberwellenarmes Sinussignal erzeugt, insbesondere mit um mindestens 40 dB gegenüber der Grundfrequenz abgeschwächten ersten und weiteren Oberwellen.

8. Vorrichtung gemäss einem der Ansprüche 4 bis 7, dadurch gekennzeichnet, dass der Signalgenerator (45, 46) zwei Teilsignalgeneratoren mit aneinander anschliessenden, zusammen den gesamten Frequenzbereich der empfangbaren Kanäle abdeckenden Frequenzeinstellbereichen, insbesondere von 40 bis 450 MHz und von 450 bis 1000 MHz, aufweist, deren Ausgänge mit einem HF-Umschalter (48) verbunden sind, dessen Ausgang den Ausgang des Signalgenerators (45, 46) bildet.

9. Vorrichtung gemäss einem der Ansprüche 4 bis 8, dadurch gekennzeichnet, dass zwischen dem Signalgenerator (45, 46, 48) und dem HF-Schalter (52) ein HF-Pegelsteller (50) angeordnet ist.

10. Vorrichtung gemäss einem der Ansprüche 6 bis 9, dadurch gekennzeichnet, dass ein Prozessor (14) vorhanden ist, der zumindest den HF-Schalter (52) steuert und die Frequenz des Signalgenerators (45, 46) einstellt, so dass ein Burst definierter Länge und Struktur erzeugbar und über den HF-Eintaster (5) der Videokomponente des Fernsehsignals eines bestimmten, vom Prozessor ausgewählten Kanals überlagerbar ist.

11. Vorrichtung gemäss Anspruch 10, dadurch gekennzeichnet, dass mit dem Prozessor (14) Synchronisationsmittel (67; 19, 92 - 94, 96 - 98) verbunden sind, mittels derer die Zeitpunkte der Bildwechsel und der Zeilenrückläufe der Bilddarstellung des ausgewählten Kanals bestimmbar sind.

12. Vorrichtung gemäss Anspruch 10 oder 11, dadurch gekennzeichnet, dass ein Festfrequenzoszillator (77) für ein oberwellenarmes Sinussignal vorhanden ist, dessen Ausgangssignal über elektrische, vom Prozessor (14) steuerbare Schaltmittel (75, 78) mindestens einem Videoeingang (74) eines Gerätes (2 - 4) der Videoinstallation zuführbar ist, und dessen Frequenz mit der Frequenzdifferenz zwischen dem Bildträger und dem Burstgenerator (6) übereinstimmt.

13. Vorrichtung gemäss einem der Ansprüche 10 bis 12, dadurch gekennzeichnet, dass an dem Prozessor (14) Burstdetektionsmittel (64, 65, 12) angeschlossen sind, die mit mindestens einem Videoausgang eines Gerätes der Videoinstallation verbunden sind, wodurch das Vorhandensein einer Signalkomponente mit der Frequenz des Burstsignals im Videosignal an besagtem Videoausgang vom Prozessor (14) detektierbar ist, und dass die Burstdetektionsmittel zumindest ein vom Prozessor einschaltbares Filter (64) für die Burstfrequenz und einen nachfolgenden Komparator (65) umfassen.

14. Vorrichtung gemäss einem der Ansprüche 4 bis 13, dadurch gekennzeichnet, dass mindestens eine, an einem Fernsehgerät (4) anbringbare Sonde (19) vorhanden ist, die zwei parallel zueinander angeordnete Flachspulen (103, 111) mit je einem ersten (106) und einem zweiten Ende (105, 109) aufweist, wobei die ersten Enden (106) miteinander elektrisch leitend verbunden sind, so dass sich die Induktionswirkung der beiden Spulen (103, 111) addiert, und die zweiten Enden (105, 109) den Ausgang der Sonde (19) bilden.

15. Vorrichtung gemäss Anspruch 14, dadurch gekennzeichnet, dass die Sonde (19) eine beidseitig kupferkaschierte Platine (100) enthält, und die beiden Flachspulen (103, 111) als spiralförmig verlaufende Leiterbahnen auf den beiden Seiten der Platine (100) aus der Kupferschicht herausgearbeitet sind.

16. Vorrichtung gemäss Anspruch 14 oder 15, dadurch gekennzeichnet, dass mit Ausgang (105, 109) der Sonde (19) eine Filteranordnung verbunden ist, die mindestens folgende Filter umfasst:
- ein erstes Filter (94), das für die Frequenz des Burstsignals durchlässig ist;
- ein zweites Filter (93), das für die von den Zeilenrückläufen erzeugte Signalkomponente, insbesondere für die Zeilenfrequenz, durchlässig ist; und
- ein drittes Filter (92), das für die von den Bildwechseln erzeugte Signalkomponente, insbesondere die Bildwechselfrequenz, durchlässig ist;
wobei die Ausgänge der Filter (92 - 94) mit jeweils einem Komparator (96, 97, 98) verbunden sind, dessen Ausgangssignale vom Prozessor (14) zur Erkennung der Zeilen- und Bildwechsel sowie des Burstsignals verwertbar sind.

## Claims

1. Method for determining the channel selection in a video installation comprising at least a television set (4) and/or a video recorder (2, 3) and at least one input connection for a television signal, characterised in that an identification signal (31) is locally injected into the video installation and superimposed on the video component (33) of the television signal of a channel in the form of a burst, and in that the reception of said channel in one of the devices (2, 3, 4) of the video installation is concluded from the presence of the identification signal in an output signal or a stray signal of said device.

2. Method according to claim 1, characterised in that the channel into which the identification signal is injected is selected according to one or a combination of the following sequences:
- selection only from channels used for television programmes;
- sequentially according to channel numbers;
- according to a predetermined priority list;
- according to a sequence of decreasing utilization of the channel, a set of statistics on frequency and duration of the choice of a channel being continuously updated;
- in the sequence of increasing distance from the last determined channel.

3. Method according to claim 1 or 2, characterised in that the electric and magnetic stray fields emitted by the picture tube (85) of a television set (4) produce a signal in a probe (19) which is disposed in the proximity of the television set (4), and in that this signal is divided by filters (92 to 94) into at least three partial signals, the first partial signal being used for determining the time of picture repetition, the second one for determining the line repetition, and the third one containing the burst.

4. Device for carrying out the method according to any one of claims 1 to 3, characterised in that a HF injector (5) is inserted between the input of the video installation for a television signal and a television connection (1), a second input of said injector (5) being connected to the output of a burst generator (6) which provides a substantially sine shaped signal which is offset by a predetermined constant frequency difference with respect to the picture carrier of the television signal of a channel.

5. Device according to claim 4, characterised in that the frequency difference to the picture carrier of the television signal is in the range of 1 MHz to 4 MHz and is in particular about 2 MHz.

6. Device according to claim 4 or 5, characterised in that the burst generator (6) is composed of at least one signal generator (45, 46) having an adjustable frequency, and a HF switch (52) by which the signal of the signal generator (45, 46) can be forwarded to the second input of the HF injector (5).

7. Device according to claim 4, characterised in that the signal generator (45, 46) produces a sine signal of low harmonic content, in particular a signal whose first and following harmonics are attenuated by at least 40 dB with respect to the fundamental frequency.

8. Device according to any one of claims 4 to 7, characterised in that the signal generator (45, 46) comprises two partial signal generators with adjoining frequency adjusting ranges covering together the entire frequency range of the receivable channels, particularly from 40 to 450 MHz and from 450 to 1,000 MHz, whose outputs are connected to a HF commuting switch (48) the output of which constitutes the output of the signal generator (45, 46).

9. Device according to any one of claims 4 to 8, characterised in that a HF level controller (50) is disposed between the signal generator (45, 46, 48) and the HF switch (52).

10. Device according to any one of claims 6 to 9, characterised in that a processor (14) is provided which controls at least the HF switch (52) and adjusts the frequency of the signal generator (45, 46) so that a burst of definite length and structure is able to be produced and to be superimposed with the aid of the HF injector (5) on the video component of the television signal of a determined channel selected by the processor.

11. Device according to claim 10, characterised in that synchronisation means (67; 19, 92 to 94, 96 to 98) are connected to the processor (14), the time of picture repetition and the line flybacks of the picture display of the selected channel being able to be determined by means of these synchronization means.

12. Device according to claim 10 or 11, characterised in that a fixed frequency oscillator (77) producing a sine signal of low harmonic content is provided whose output signal can be fed through electrical switching means (75, 78), controlled by the processor (14), to at least one video input (74) of a device (2 to 4) of the video installation, and whose frequency equals the frequency difference between the picture carrier and the burst generator (6).

13. Device according to any one of claims 10 to 12, characterised in that burst detecting means (64, 65, 12) are connected to the processor (14), said means being connected to at least one video output of a device of the video installation, thus enabling the detection at said video output of the presence of a signal component having the frequency of the burst signal in the video signal by the processor (14), and in that the burst detecting means comprise at least one filter (64), switchable by the processor, for the burst frequency, and a following comparator (65).

14. Device according to any one of claims 4 to 13, characterised in that at least one probe (19) fastenable to a television set (4) is provided, said probe comprising two flat coils (103, 111) disposed in parallel relationship and having a first (106) and a second (105, 109) end each, said first ends (106) being electrically connected so that the inductive effects of the two coils (103, 111 ) are adding up, said second ends (105, 109) forming the output of the probe (19).

15. Device according to claim 14, characterised in that the probe (19) comprises a double sided copper-clad board (100), and in that the two flat coils (103, 111 ) are worked out of the copper layer in the form of spiral strip conductors on both sides of the board (100).

16. Device according to claim 14 or 15, characterised in that the output (105, 109) of the probe (19) is connected to a filter array which comprises at least the following filters:
- a first filter (94) pervious for the frequency of the burst signal;
- a second filter (93) pervious for the signal component produced by the line flybacks, especially for the line frequency; and
- a third filter (92) pervious for the signal component produced by the picture repetitions, especially for the picture repetition frequency;
the outputs of the filters (92 to 94) being connected each to one comparator (96, 97, 98) the output signals thereof being usable by the processor (14) to recognize the line and picture repetitions as well as the burst signal.

## Revendications

1. Procédé pour déterminer le canal sélectionné dans une installation vidéo comprenant au moins un téléviseur (4) et/ou un enregistreur vidéo (2, 3) et présentant au moins une entrée pour un signal de télévision, caractérisé en ce qu'un signal d'identification (31) est localement injecté dans ladite installation vidéo et superposé à la composante vidéo (33) du signal de télévision d'un canal sous forme d'une rafale, et en ce que la réception dudit canal par l'un des appareils (2, 3, 4) est déduite de la présence dudit signal d'indentification dans un signal de sortie ou parasite dudit appareil.

2. Procédé selon la revendication 1, caractérisé en ce que le canal dans lequel ledit signal d'identification est injecté est sélectionné dans l'ordre ou une combinaison des ordres suivants:
- sélection uniquement parmi les canaux occupés par des programmes de télévision;
- séquentiellement selon le numéro du canal;
- selon une liste de priorités donnée;
- dans l'ordre d'utilisation décroissante du canal, une statistique sur la fréquence et la durée de la sélection d'un canal étant continuellement mise à jour à cette fin;
- dans l'ordre de distance croissante du dernier canal déterminé.

3. Procédé selon la revendication 1 ou 2, caractérisé en ce que les champs de dispersion électriques et magnétiques émis par le tube image (85) d'un téléviseur (4) produisent un signal dans une sonde (19) disposée à proximité dudit téléviseur (4), et en ce que ledit signal est divisé par des filtres (92 - 94) en trois signaux partiels au moins, le premier signal partiel étant utilisé pour déterminer le moment de répétition d'image, le deuxième pour déterminer le retour de balayage horizontal, et le troisième contenant ladite rafale.

4. Dispositif pour la mise en oeuvre du procédé selon l'une des revendications 1 à 3, caractérisé en ce qu'un injecteur HF (5) est bouclé entre l'entrée du signal de télévision de l'installation vidéo et une prise de télévision (1), une deuxième entrée dudit injecteur étant reliée à la sortie d'un générateur de rafale (6) délivrant un signal essentiellement sinusoïdal décalé d'une différence de fréquence déterminée et constante par rapport à la porteuse image du signal de télévision.

5. Dispositif selon la revendication 4, caractérisé en ce que ladite différence de fréquence par rapport à la porteuse image du signal de télévision est dans l'ordre de 1 MHz à 4 MHz, plus particulièrement environ 2 MHz.

6. Dispositif selon la revendication 4 ou 5, caractérisé en ce que ledit générateur de rafale (6) est composé d'au moins un générateur de signaux (45, 46) à fréquence variable et d'un commutateur HF (52) permettant de commuter le signal du générateur de signaux (45, 46) à la deuxième entrée dudit injecteur HF (5).

7. Dispositif selon la revendication 4, caractérisé en ce que ledit générateur de signaux (45, 46) produit un signal sinusoïdal pauvre en harmoniques, plus particulièrement un signal dont la première et les autres harmoniques sont atténuées au moins 40 dB par rapport à la fréquence fondamentale.

8. Dispositif selon l'une quelconque des revendications 4 à 7, caractérisé en ce que le générateur de signaux (45, 46) comporte deux générateurs de signaux partiels dont les étendues de réglage se rejoignent et couvrent ensemble la gamme de fréquences entière des canaux pouvant être reçus, plus particulièrement de 40 à 450 MHz et de 450 à 1000 MHz, et dont les sorties sont reliées à un commutateur HF (48) dont la sortie forme la sortie des générateurs de signaux (45, 46).

9. Dispositif selon l'une quelconque des revendications 4 à 8, caractérisé en ce qu'un réglage de niveau HF (50) est disposé entre ledit générateur de signaux (45, 46, 48) et ledit commutateur HF (52).

10. Dispositif selon l'une quelconque des revendications 6 à 9, caractérisé en ce qu'un processeur (14) est prévu qui commande au moins ledit commutateur HF (52) et règle la fréquence du générateur de signaux (45, 46), de façon qu'une rafale de longueur et de structure définies peut être produite et superposée, par l'intermédiaire dudit injecteur HF (5), à la composante vidéo du signal de télévision d'un canal donné, sélectionné par le processeur.

11. Dispositif selon la revendication 10, caractérisé en ce que des moyens de synchronisation (67; 19, 92 - 94, 96 - 98) sont reliés audit processeur (14), lesdits moyens permettant de déterminer les moments des répétitions d'image et des retours de balayage horizontal de la présentation d'image du canal sélectionné.

12. Dispositif selon la revendication 10 ou 11, caractérisé en ce qu'un oscillateur à fréquence fixe (77) produisant un signal sinusoïdal pauvre en harmoniques est prévu dont le signal de sortie est alimenté, par l'intermédiaire de moyens de commutation électriques (75, 78) pouvant être commandés par ledit processeur (14), à une entrée vidéo (74) au moins d'un appareil (2 - 4) de l'installation vidéo, et dont la fréquence coïncide avec la différence de fréquence entre la porteuse image et le générateur de rafale (6).

13. Dispositif selon l'une des revendications 10 à 12, caractérisé en ce des moyens de détection de rafale (64, 65, 12) sont connectés audit processeur (14) qui sont reliés à au moins une sortie vidéo d'un appareil de l'installation vidéo, ce qui permet au processeur (14) de détecter la présence d'une composante ayant la fréquence du signal de rafale dans le signal vidéo de la sortie vidéo mentionnée, et en ce que lesdits moyens de détection de rafale comportent au moins un filtre (64) pour la fréquence de la rafale, pouvant être enclenché par le processeur, ainsi qu'un comparateur (65) suivant.

14. Dispositif selon l'une quelconque des revendications 4 à 13, caractérisé en ce qu'au moins une sonde (19) attachable à un téléviseur (4) est prévue qui comporte deux bobines plates (103, 111) disposées en parallèle et ayant chacune une première (106) et une deuxième extrémité (105, 109), les premières extrémités (106) étant reliées en connexion électriquement conductrice de sorte que l'effet inductif des deux bobines (103, 111) s'additionne, et les deuxièmes extrémités (105, 109) formant la sortie de la sonde (19).

15. Dispositif selon la revendication 14, caractérisé en ce que la sonde (19) comporte une carte (100) recouverte de cuivre des deux côtés, et que les deux bobines plates (103, 111) sont façonnées dans la couche de cuivre sous forme de tracés spiroïdes sur les deux côtés de ladite carte (100).

16. Dispositif selon la revendication 14 ou 15, caractérisé en ce qu'un ensemble de filtres est relié à la sortie (105, 109) de la sonde (19), ledit ensemble comprenant au moins les filtres suivants:
- un premier filtre (94) laissant passer la fréquence du signal de rafale;
- un deuxième filtre (93) laissant passer la composante du signal produite par les retours de balayage horizontal, plus particulièrement la fréquence de balayage; et
- un troisième filtre (92) laissant passer la composante du signal produite par les répétitions d'image, plus particulièrement la fréquence de répétition d'image;
les sorties des filtres (92 - 94) étant chaque fois reliées à un comparateur (96, 97, 98) dont les signaux de sortie sont utilisés par le processeur (14) pour l'identification des répétitions de balayage horizontal et d'image ainsi que du signal de rafale.
